# EUROPÄISCHE PATENTSCHRIFT

(11) **EP 3 612 427 B1**
(45) Veröffentlichungstag und Bekanntmachung des Hinweises auf die Patenterteilung: **25.06.2025**
(21) Anmeldenummer: 18719818.9
(22) Anmeldetag: 19.04.2018
(51) Int. Cl.: B60K 35/22

(54) **BEDIENEINRICHTUNG ZUM STEUERN VON FUNKTIONEN EINES KRAFTFAHRZEUGS UND VERFAHREN ZUM BETREIBEN EINER SOLCHEN**
OPERATING DEVICE FOR CONTROLLING FUNCTIONS OF A MOTOR VEHICLE AND METHOD FOR OPERATING SAME
DISPOSITIF DE COMMANDE PERMETTANT DE COMMANDER DES FONCTIONS D'UN VÉHICULE AUTOMOBILE ET PROCÉDÉ PERMETTANT DE FAIRE FONCTIONNER UN TEL DISPOSITIF DE COMMANDE

(30) Priorität: 21.04.2017 DE 102017206785
(43) Veröffentlichungstag der Anmeldung: 26.02.2020
(73) Patentinhaber: Bayerische Motoren Werke Aktiengesellschaft, 80809 München (DE)
(72) Erfinder: HORNA, Günter, 80801 München (DE)
(86) Internationale Anmeldenummer: PCT/EP2018/059970
(87) Internationale Veröffentlichungsnummer: WO 2018/193008

(56) Entgegenhaltungen:
- EP-A2- 1 010 585
- WO-A2-2007/009745
- DE-A1- 102005 040 125
- DE-A1- 102006 060 635
- DE-A1- 102007 043 935
- DE-A1- 102011 106 784
- DE-A1- 102012 020 022
- DE-A1- 102012 218 843
- DE-B3- 102015 016 499
- FR-A1- 3 030 071
- US-B1- 7 060 924

## Beschreibung

Die Erfindung betrifft eine Bedieneinrichtung zum Steuern von Funktionen eines Kraftfahrzeugs der im Patentanspruch 1 angegebenen Art. Darüber hinaus betrifft die Erfindung ein Verfahren zum Betreiben einer solchen Bedieneinrichtung gemäß Patentanspruch 7.

Ähnliche Bedieneinrichtungen kommen in modernen Kraftfahrzeugen zum Einsatz, damit der Nutzer in der Lage ist, insbesondere sekundäre Fahrzeugfunktionen besonders komfortabel steuern zu können. Mit sekundären Fahrzeugfunktionen sind Fahrzeugfunktionen gemeint, welche nicht direkt mit der Fahrtätigkeit (Lenken, Geschwindigkeit regeln, Fahrstufe wählen etc.) zusammenhängen. Bei modernen Kraftfahrzeugen verfügen diese Bedieneinrichtungen üblicherweise über eine graphische Benutzerschnittstelle, zum Beispiel einen Bildschirm in Verbindung mit einem Steuerelement. Ferner umfassen solche Bedieneinrichtungen zumindest ein Bedienelement, mittels welchem der Nutzer Eingaben durchführen kann. Oft sind diese Bedieneinrichtungen mit einer Funktion ausgestattet, welche es dem Nutzer erlaubt, eine bestimmte sekundäre Fahrzeugfunktion auf ein vom Nutzer bevorzugtes Bedienelement zu legen.

Die DE 10 2005 040125 A1 offenbart eine Bedienvorrichtung mit einem Drehknopf mit einem Drehelement, wobei zur Bedienung des Drehknopfes einer Anzahl von mechanischen Rastungen vorgesehen, durch welche ein Benutzer die Zwischenstellungen bzw. Stellungen aus der Vielzahl von Stellungen taktil fühlen kann.

Die US 7 060 924 B1 offenbart eine Tastatur, bei welche ein sanfter Druck und ein fester Druck auf einer Taste auf der Tastatur ausübbar ist. Die Tastatur erkennt den sanften Druck. Das Gerät reagiert auf den sanften Druck, indem es eine visuelle und/oder akustische Darstellung einer mit der Taste verbundenen Funktion erzeugt. Bei dem Festen Druck wird die Funktion durchgeführt.

Die DE 10 2012 218 843 A1 offenbart ein Bediensystem mit einer Steuereinheit, einer ein Bedienelement aufweisenden Eingabevorrichtung sowie mit einer Bilderfassungseinrichtung, mittels derer eine Annäherung eines Körperteils eines Nutzers an das Bedienelement darstellendes Bildmaterial erfassbar und der Steuereinheit bereitstellbar ist.

Die EP 1 010 585 A2 eine Bedienvorrichtung, einem Stellglied und mit einem Hemmelement, mittels dessen ein einer ausgewählten Funktion zugeordnetes Drehgefühl eines Drehstellers des Stellglieds als haptische Rückmeldung bereitstellbar ist.

Nachteilig bei derartigen Bedieneinrichtungen ist allerdings, dass diese Bedieneinrichtungen typischerweise in einer geschützten Umgebung, zum Beispiel einer Fahrgastzelle eines Personenkraftwagens, durch den Nutzer bedient werden. Das bedeutet, dass ein einfaches Übertragen dieser Technologie in den Bereich der einspurigen Kraftfahrzeuge, insbesondere Krafträder, nicht ohne Weiteres möglich ist. Denn der typische Nutzer eines Kraftrades schützt sich durch das Tragen von Schutzkleidung, insbesondere dicken Handschuhen. Somit kann der Nutzer des Kraftrades beispielsweise nicht unbedingt in der Lage sein, die üblicherweise sehr filigran ausgeführten Bedienelemente einer eingangs beschriebenen Bedieneinrichtung vollumfänglich zu bedienen. Beispielsweise kann es dem Nutzer des Kraftrades nicht möglich sein, zwischen einer simplen Berührung und einer bereits begonnenen Betätigung eines Bedienelements zu unterscheiden.

Aufgabe der Erfindung ist es, eine Bedieneinrichtung zum Steuern von Funktionen eines Kraftfahrzeugs, insbesondere Kraftrades, bereitzustellen, welche vollumfänglich durch Schutzkleidung hindurch bedienbar ist.

Diese Aufgabe wird erfindungsgemäß durch eine Bedieneinrichtung mit den Merkmalen des Patentanspruchs 1 gelöst. Darüber hinaus wird diese Aufgabe auch durch ein Verfahren nach Patentanspruch 7 gelöst.

Vorteilhafte Ausgestaltungen mit zweckmäßigen Weiterbildungen der Erfindung sind in den übrigen Patentansprüchen angegebenen.

Erfindungsgemäß ist demnach eine Bedieneinrichtung zum Steuern von Funktionen eines Kraftfahrzeugs vorgesehen, mit einem Bedienelement, welches aus einer Ruhestellung über eine erste Betätigungsstellung hinaus in eine zweite Betätigungsstellung verlagerbar ist, und mit einer Steuereinheit, welche dazu eingerichtet ist, in Abhängigkeit von einer Funktion, mit welcher das Bedienelement belegt ist, eine Anzeigeeinrichtung zum Anzeigen einer der Funktion zugeordneten Information anzusteuern, wenn das Bedienelement in der ersten Betätigungsstellung angeordnet ist, und die Funktion auszulösen, wenn das Bedienelement in der zweiten Betätigungsstellung angeordnet ist, wobei die Bedieneinrichtung dazu ausgelegt ist, eine taktil wahrnehmbare Rückmeldung in zumindest einer der Stellungen des Bedienelements auszugeben.

Mit anderen Worten umfasst die Bedieneinrichtung eine Steuereinheit, welche einerseits mit dem Bedienelement und andererseits mit der Anzeigeeinrichtung verbunden ist. Ist das Bedienelement, zum Beispiel mittels eines Nutzers, insbesondere eines Fahrers, des Kraftfahrzeugs, vorzugsweise eines Kraftrades, in die erste Betätigungsstellung betätigt, das heißt aus der Ruhestellung in die erste Betätigungsstellung ausgelenkt, ist mittels der Steuereinheit die der Funktion zugeordnete Information über die Anzeigeeinrichtung ausgebbar. Die der Funktion zugeordnete Information kann zum Beispiel einem Nutzer Aufschluss darüber geben, mit welcher Funktion das Bedienelement momentan belegt ist. Ist das Bedienelement über die erste Betätigungsstellung hinaus in die zweite Betätigungsstellung ausgelenkt, ist die Funktion, mit welcher das Bedienelement momentan belegt ist, auslösbar. Bei dieser Funktion kann es sich insbesondere um sekundäre Fahrzeugfunktionen handeln, welche nicht direkt in Zusammenhang mit der Fahrtätigkeit stehen.

Die Steuereinheit ist dazu eingerichtet, einen auf das Bedienelement einwirkenden Aktor zum Ausgeben einer taktil wahrnehmbaren Rückmeldung anzusteuern. Dies ist vorteilhaft, da ein räumlicher Zusammenhang zwischen dem Bedienelement und der taktil wahrnehmbaren Rückmeldung besteht, wodurch für den Fahrer des Kraftfahrzeugs ein intuitiver Zusammenhang zwischen einer Betätigung des Bedienelements und der Rückmeldung besteht. Anders ausgedrückt kann es für den Fahrer selbsterklärend sein, dass die taktil wahrnehmbare Rückmeldung zustande kommt, indem der Fahrer das Bedienelement betätigt hat.

Erfindungsgemäß ist ferner vorgesehen, dass über die Bedieneinrichtung dem Nutzer eine Rückmeldung gegeben wird, sodass dieser zweifelsfrei feststellen kann, in welcher Betätigungsstellung das Bedienelement momentan angeordnet ist. Erfindungsgemäß ist diese Rückmeldung taktil wahrnehmbar, sodass der Nutzer des Kraftfahrzeugs auch durch Schutzhandschuhe hindurch die Rückmeldung eindeutig interpretieren kann.

Beispielsweise kann diese Rückmeldung ausgebbar sein, wenn das Bedienelement in der ersten Betätigungsstellung angeordnet ist. Alternativ oder zusätzlich kann die Rückmeldung über die Bedieneinrichtung ausgebbar sein, wenn das Bedienelement in der zweiten Betätigungsstellung angeordnet ist.

Die hierin beschriebene Bedieneinrichtung kann aber auch in einem als Personenkraftwagen oder Nutzkraftwagen ausgebildeten Kraftfahrzeug in vorteilhafter Weise Verwendung finden, da es auch bei diesen Kraftfahrzeugen zu Gegebenheiten kommen kann, bei welchen eine herkömmliche Bedieneinrichtung nur unter erschwerten Bedingungen vollumfänglich bedient werden kann. Beispielsweise können auf den Nutzer des Kraftfahrzeugs insbesondere bei einer besonders unruhigen Fahrt, etwa bei einer Geländefahrt oder bei besonders schlechtem Zustand einer Fahrbahn, über das Kraftfahrzeug Erschütterungen auf den Nutzer übertragen werden. Es ist weiter zu beachten, dass Nutzer von Kraftfahrzeugen während einer Fahrt, beispielsweise aus arbeitschutzrechtlichen Gründen oder auch krankheitsbedingt, dazu gezwungen sein können, Handschuhe und/oder weitere Schutzkleidung zu tragen.

In einer weiteren Ausführungsform der Erfindung liegt ein Betätigungsanteil des Bedienelements in der ersten Betätigungsstellung an einer Anschlagstufe an, wodurch eine taktil wahrnehmbare Rückmeldung erzeugbar ist. Dies ist vorteilhaft, da ein insbesondere räumlicher Zusammenhang zwischen einem Betätigen des Bedienelements und der taktilen Rückmeldung vorhanden ist. Somit ist es für einen Nutzer des Kraftfahrzeugs eindeutig klar, dass die Rückmeldung, welche der Nutzer erhalten hat, direkt mit dem Bedienelement zusammenhängt. Dadurch ist der Nutzer in einem besonders geringen Maße abgelenkt, was sich in einem Sicherheitsgewinn äußert.

Alternativ oder zusätzlich liegt der Betätigungsanteil des Bedienelements in der zweiten Betätigungsstellung an einem Endanschlag an, wodurch eine taktil wahrnehmbare Rückmeldung erzeugbar ist. So ist es für den Nutzer des Kraftfahrzeugs auch klar, wenn dieser das Betätigungselement in die zweite Betätigungsstellung verlagert hat.

Als weiter vorteilhaft hat es sich gezeigt, wenn die Steuereinheit dazu eingerichtet ist, einen auf ein von der Bedieneinrichtung unterschiedliches Bauteil einwirkenden Aktor zum Ausgeben einer taktil wahrnehmbaren Rückmeldung anzusteuern. Das bedeutet, dass die taktil wahrnehmbare Rückmeldung nicht zwingend in räumlichem Zusammenhang mit dem Bedienelement stehen muss. So kann beispielsweise ein vorhandener Aktor genutzt werden, welcher dazu eingerichtet sein kann, dem Nutzer des Kraftfahrzeugs, beispielsweise mittels einer Vibration, Informationen bzw. (Warn-)Signale eines Fahrerassistenzsystems zukommen zu lassen. Beispielsweise kann die Rückmeldung an einer Pedalerie, an einer Sitzfläche, an einem Lenker oder an einer anderen Stelle erfolgen, wo der Nutzer mit dem Kraftfahrzeug in direktem, körperlichen Kontakt steht.

Bei einem Einsatz von insbesondere aktiv angesteuerten Aktoren ist vorteilhaft, dass ein spürbares Signal der jeweiligen, eventuell schon vorhandenen Aktoren, zum Beispiel ein Vibrationssignal, bereits dazu ausgelegt ist, durch einen Handschuh oder weitere Teile einer Schutzbekleidung eindeutig spürbar zu sein. Weiter vorteilhaft hierbei ist, dass die Bedieneinrichtung besonders aufwandsarm in das Kraftfahrzeug integrierbar sein kann.

In weiterer vorteilhafter Ausgestaltung der Erfindung ist vorgesehen, dass die Steuereinheit dazu eingerichtet ist, den Aktor oder die Aktoren zum Ausgeben einer taktil wahrnehmbaren Rückmeldung in zumindest einer der Stellungen des Bedienelements anzusteuern. Anders ausgedrückt kann der jeweilige Aktor mittels der Steuereinheit ansteuerbar sein, wenn das Bedienelement in der ersten Betätigungsstellung angeordnet ist. Alternativ oder zusätzlich kann der Aktor über die Steuereinheit ansteuerbar sein, wenn das Bedienelement in der zweiten Betätigungsstellung angeordnet ist. Insbesondere kann die Steuereinheit dazu eingerichtet sein, jeweils unterschiedliche Signale auszugeben, sodass mittels des jeweiligen Aktors eine erste taktil wahrnehmbare Rückmeldung ausgebbar ist, wenn das Bedienelement in der ersten Betätigungsstellung angeordnet ist, und eine zweite taktil wahrnehmbare Rückmeldung, wenn das Bedienelement in der zweiten Betätigungsstellung angeordnet ist. Hierbei können die erste und die zweite taktil wahrnehmbare Rückmeldung voneinander unterschiedlich sein. Das ist insbesondere vorteilhaft, da es für den Nutzer eindeutig klar ist, ob dieser das Bedienelement in die erste oder in die zweite Betätigungsstellung betätigt hat.

Gemäß einer vorteilhaften Ausführungsform ist vorgesehen, dass die Bedieneinrichtung zumindest bereichsweise gegen ein Eindringen von Feuchtigkeit geschützt ist. Das ist insbesondere im Hinblick auf einen Verwendungszweck der Bedieneinrichtung auf einem als Kraftrad ausgebildeten Kraftfahrzeug sinnvoll. Denn eine auch nur teilweise geschlossene Fahrgastzelle entfällt bei einem Kraftrad, wodurch einerseits der Nutzer des Kraftrads und andererseits die Bedieneinrichtung mit ihren Bedienelementen vor Witterungs- und Umwelteinflüssen ungeschützt sind.

Die vorliegende Erfindung sieht ferner ein Verfahren zum Betreiben einer Bedieneinrichtung, wie sie hierin beschrieben ist, vor, bei welchem mittels der Steuereinheit in Abhängigkeit von der Funktion, mit welcher das Bedienelement belegt ist, die Anzeigeeinrichtung zum Anzeigen der Information, die der Funktion zugeordnet ist, angesteuert wird, wenn das Bedienelement in der ersten Betätigungsstellung angeordnet ist. Ferner ist Teil des Verfahrens, dass mittels der Steuereinheit in Abhängigkeit von der Funktion, mit welcher das Bedienelement belegt ist, die Funktion ausgelöst wird, wenn das Bedienelement in der zweiten Betätigungsstellung angeordnet ist. Darüber hinaus wird in dem Verfahren mittels der Bedieneinrichtung eine taktil wahrnehmbare Rückmeldung in zumindest einer der Stellungen des Bedienelements ausgegeben.

Anders ausgedrückt umfasst das Verfahren einen ersten Schritt, bei welchem, sobald das Bedienelement in der ersten Betätigungsstellung angeordnet ist, mittels der Steuereinheit die Anzeigeeinrichtung angesteuert wird, derart, dass auf der Anzeigeeinrichtung die Information angezeigt wird, die Aufschluss und/oder nähere Details zu der Funktion gibt, welche momentan dem Bedienelement zugewiesen ist. In einem zweiten Schritt, das heißt, wenn das Bedienelement in der zweiten Betätigungsstellung angeordnet ist, wird mittels der Steuereinheit die Funktion ausgelöst, die momentan dem Bedienelement zugewiesen ist. Bei diesem Verfahren ist ferner vorgesehen, dass eine taktil wahrnehmbare Rückmeldung, das heißt zum Beispiel ein Vibrieren, ausgegeben wird, und zwar dann, wenn das Bedienelement in einer der Betätigungsstellungen angeordnet wird. Insbesondere ist es denkbar, dass mittels der Bedieneinrichtung jeweils eine taktil wahrnehmbare Rückmeldung ausgegeben wird, wenn das Bedienelement in der ersten und in der zweiten Stellung angeordnet wird.

Bei einer vorteilhaften Weiterbildung des Verfahrens zum Betreiben der Bedieneinrichtung kann dem Bedienelement mittels der Steuereinheit eine andere Funktion zugewiesen werden, wenn das Bedienelement für eine vorgegebene Mindestdauer in der zweiten Betätigungsstellung gehalten wird und währenddessen ein die andere Funktion repräsentierendes Element mittels der Anzeigeeinrichtung optisch markiert ist. Beispielsweise kann ein Nutzer des Kraftfahrzeugs dem entsprechenden Bedienelement eine Funktion zuweisen, indem er zunächst den entsprechenden Eintrag, das heißt das die Funktion repräsentierende Element, auf der Anzeigeeinrichtung anzeigen lässt und einen Fokus darauf legt. Beispielsweise kann das die Funktion repräsentierende Element eingerahmt sein, über einen besonders kontrastreichen Hintergrund verfügen, ein (Maus-)Zeiger kann darauf ruhen bzw. darauf zeigen etc. Darauffolgend kann der Nutzer das Bedienelement in die zweite Betätigungsstellung auslenken und dort halten, zum Beispiel drücken und danach gedrückt halten, wodurch dem betätigten Bedienelement genau die Funktion zugewiesen wird, deren entsprechender Eintrag momentan auf der Anzeigeeinrichtung ausgewählt, d. h. mit zumindest einer der gerade beschriebenen Maßnahmen fokussiert ist. Dies ist insofern vorteilhaft, als ein Nutzer in der Lage ist, von ihm bevorzugte Fahrzeugfunktionen, welche mittels der Anzeigeeinrichtung anzeigbar sind, mit einem besonders schnell erreichbaren Bedienelement zu verknüpfen. Die besonders bevorzugten Fahrzeugfunktionen können Fahrzeugfunktionen sein, die der Nutzer bzw. Fahrer besonders häufig auslöst. Hierdurch sinkt insbesondere beim Aufrufen der gewünschten Funktion die dazu benötigte Dauer, sodass der Fahrer nur in besonders geringem Maße von primären Fahrtätigkeiten und/oder einem Verkehrsgeschehen abgelenkt ist.

Ferner hat es sich als vorteilhaft herausgestellt, wenn bei dem Verfahren mittels der Steuereinheit ein Aktor zum Ausgeben einer taktil wahrnehmbare Rückmeldung angesteuert wird, sobald die Zuweisung der anderen Funktion zu dem Bedienelement erfolgt ist. Anders ausgedrückt steuert die Steuereinheit den Aktor an, damit dieser die taktil wahrnehmbare Rückmeldung als Bestätigung ausgibt, sobald die andere Funktion dem Bedienelement zugeordnet worden ist. Das ist besonders vorteilhaft, da dem Nutzer des Kraftfahrzeugs eindeutig bestätigt wird, dass eine neue Funktion dem Bedienelement zugewiesen worden ist, wodurch für den Nutzer klar ist, dass er das entsprechende Bedienelement wieder loslassen kann.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Vorteilhafte Ausgestaltungen der erfindungsgemäßen Bedieneinrichtung zum Steuern von Funktionen eines Kraftfahrzeugs sind als vorteilhafte Ausführungsformen des erfindungsgemäßen Verfahrens zum Betreiben dieser Bedieneinrichtung anzusehen, wobei die Mittel der Bedieneinrichtung zur Durchführung der Verfahrensschritte eingesetzt sind.

Die Erfindung wird nun anhand eines bevorzugten Ausführungsbeispiels sowie unter Bezugnahme auf die Zeichnungen näher erläutert. Es zeigt:
- Fig. 1: ein schematisches Blockschaltbild einer Bedieneinrichtung zum Steuern von Funktion eines Kraftfahrzeugs;
- Fig. 2: ein Bedienelement der Bedieneinrichtung, welches in der ersten Betätigungsstellung (Fig. 2a) und in der zweiten Betätigungsstellung (Fig. 2b) angeordnet ist; und
- Fig. 3: Schritte eines Verfahrens zum Betreiben der Bedieneinrichtung.

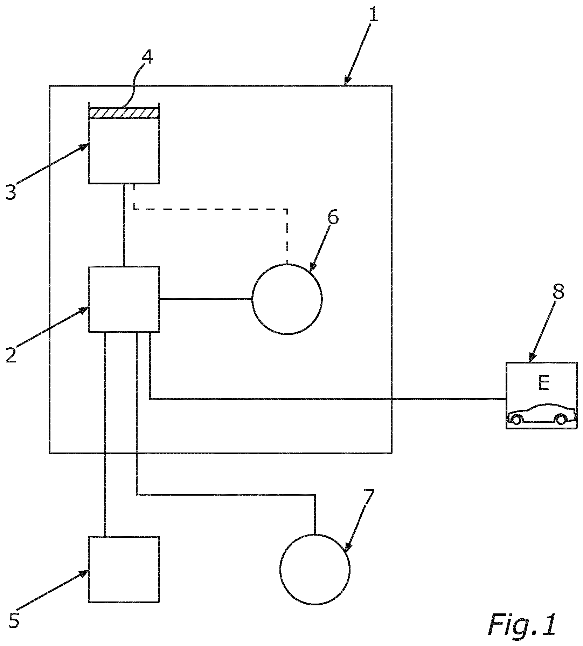

Fig. 1 zeigt in einem schematischen Blockschaltbild eine Bedieneinrichtung 1 zum Steuern von Funktionen eines als Kraftrad ausgebildeten Kraftfahrzeugs. Ein Kraftrad ist ein einspuriges Kraftfahrzeug, auf welchem ein Nutzer rittlings sitzt, ähnlich wie auf einem Fahrrad. Da bei einem Kraftrad, welches auch Motorrad oder Krad genannt werden kann, eine Fahrgastzelle fehlt, sind der Nutzer sowie Bedienelemente des Kraftrades nicht von der Umwelt abgegrenzt. Darüber hinaus ist der Nutzer naturgemäß beim Fahren des Kraftrades den Witterungseinflüssen zusätzlich zum Fahrtwind ausgesetzt, weshalb sich der Nutzer des Motorrades üblicherweise mittels spezieller Schutzkleidung schützt, welche auch ein Paar Handschuhe umfassen kann. Weiter führt der direkte körperliche Kontakt zwischen dem Fahrer des Kraftrades und dem Kraftrad dazu, dass Vibrationen des Kraftrades direkt auf den Fahrer übertragen werden. Dementsprechend sind besondere Anforderungen an Bedieneinrichtungen von Krafträdern gestellt, welche im Folgenden genauer beschrieben werden.

Dementsprechend ist in Fig. 1 die Bedieneinrichtung 1 dargestellt, welche eine Steuereinheit 2 und ein damit verbundenes Bedienelement 3 aufweist. Das Bedienelement 3 kann drei Stellungen einnehmen. So wie es in Fig. 1 dargestellt ist, ist das Bedienelement 3 in der Ruhestellung angeordnet. Das bedeutet, dass ein Betätigungsanteil 4 des Bedienelements 3 nicht betätigt ist und sich in der Ausgangsstellung befindet. Wird der Betätigungsanteil 4 betätigt, also zum Beispiel durch den Fahrer gedrückt, so ist das Bedienelement 3 in eine erste Betätigungsstellung verlagerbar. Endet eine Betätigung an diesem Punkt, ist das Bedienelement dazu eingerichtet, automatisch wieder in die Betätigungsstellung überzugehen. Beispielsweise, jedoch nicht näher erläutert, kann das Bedienelement ein Federelement aufweisen, welches spannbar ist, indem der Betätigungsanteil 4 innerhalb des Bedienelements 3 verlagert wird. Dementsprechend kann der Betätigungsanteil 4 unter einem Entspannen des Federelements insbesondere automatisch in die Ruheposition verlagerbar sein.

Das Bedienelement 3 ist mit dem Steuergerät bzw. mit der Steuereinheit 2 drahtlos und/oder drahtgebunden verbunden. Ferner ist die Bedieneinrichtung 1 mit einer Anzeigeeinrichtung 5 verbunden, wobei diese Verbindung ebenfalls drahtlos und/oder drahtgebunden realisiert sein kann. Insbesondere kann die Anzeigeeinrichtung 5 mit der Steuereinheit 2 der Bedieneinrichtung 1 verbunden sein. Darüber hinaus kann die Bedieneinrichtung 1 wenigstens einen Aktor 6 aufweisen, welcher mit der Steuereinheit 2 verbunden sein kann. Alternativ oder zusätzlich kann die Bedieneinrichtung 1 mit wenigstens einem externen Aktor 7 verbunden sein, zum Beispiel kann der externe Aktor 7 mit der Steuereinheit 2 verbunden sein.

Außerdem ist die Bedieneinrichtung 1 mit dem Kraftrad verbunden. Das bedeutet, dass die Bedieneinrichtung 1 zumindest mit einem Teil der Fahrzeugelektronik 8 des Kraftrades, also des Kraftrades, verbunden ist, wodurch die Bedieneinrichtung 1 in der Lage ist, über die Steuereinheit 2 insbesondere sekundäre Fahrzeugfunktionen des Kraftrades zu steuern. Insbesondere ist die Bedieneinrichtung 1 dazu eingerichtet, über die Steuereinheit 2 in Abhängigkeit einer Betätigungsstellung des Bedienelements 3 eine sekundäre Fahrzeugfunktion zu steuern, insbesondere auszulösen.

Wie bereits beschrieben ist die Anzeigeeinrichtung 5 mit der Bedieneinrichtung 1 derart verbunden, dass mittels der Steuereinheit 2 auf der Anzeigeeinrichtung 5 eine Information ausgebbar ist. Ist das Bedienelement 3 aus der Ruhestellung ausgelenkt und in die erste Betätigungsstellung verlagert, ist in Abhängigkeit davon auf der Anzeigeeinrichtung 5 eine Information ausgebbar, welche mit einer Fahrzeugfunktion zusammenhängt. Insbesondere kann diese Information mit der Fahrzeugfunktion zusammenhängen, welche dem Bedienelement 3 momentan zugewiesen ist. Beispielsweise kann dem Bedienelement 3 das Aufrufen des Bordcomputers zugewiesen sein. Das bedeutet, wenn der Nutzer des Kraftrades das Bedienelement 3 in die erste Betätigungsstellung anordnet, wird über die Steuereinheit 2 auf der Anzeigeeinrichtung 5 beispielsweise die Information ausgegeben, dass das Bedienelement 3 mit der Funktion des Bordcomputer verknüpft ist. Wenn das Bedienelement 3 über die erste Betätigungsstellung hinweg in die zweite Betätigungsstellung angeordnet wird, wird die Funktion ausgelöst, welchem dem Bedienelement 3 momentan zugewiesen ist. Um das obige Beispiel erneut aufzugreifen, kann beispielsweise beim Betätigen des Bedienelements 3 in die zweite Betätigungsstellung der Bordcomputer aufgerufen werden.

Die Bedieneinrichtung 1 ist ferner dazu ausgelegt, beispielsweise über das Bedienelement 3 selbst und/oder über einen oder mehr Aktoren 6 beziehungsweise über einen oder mehr Aktoren 7 eine taktil wahrnehmbare Rückmeldung an den Nutzer des Kraftrades auszugeben, wenn das Bedienelement 3 in der ersten und/oder in der zweiten Betätigungsstellung angeordnet ist. Das bedeutet, dass der Nutzer des Kraftrades, insbesondere der Fahrer, selbst bei widrigen Umständen erfühlen kann, ob er das Bedienelement 3 in die erste und/oder in die zweite Betätigungsstellung angeordnet hat. Insbesondere ist dadurch der Fahrer des Kraftrades in der Lage, durch die Schutzkleidung hindurch zu spüren, in welcher Betätigungsstellung das Bedienelement 3 momentan angeordnet ist. So ist es für den Fahrer des Kraftrades bereits beim Betätigen des Bedienelements 3 klar, ob eine Information auf der Anzeigeeinrichtung 5 ausgegeben wird, oder ob die Funktion, welche dem Bedienelement 3 zugeordnet ist, ausgelöst wird. Mit anderen Worten kann der Fahrer des Kraftrades zielgenau entscheiden, ob er lediglich eine Information zu der entsprechenden Funktion erhalten will, oder ob er diese Funktion letztendlich auslösen möchte.

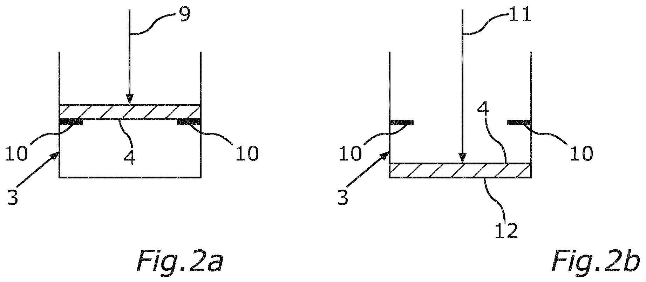

Die Fig. 2a und 2b zeigen jeweils in einer schematischen Darstellung ein Prinzip des Bedienelements 3 der Bedieneinrichtung 1, welches in der ersten Betätigungsstellung (Fig. 2a) und in der zweiten Betätigungsstellung (Fig. 2b) angeordnet ist. Ausgehend von der Ruhestellung des Bedienelements 3, wie es in Fig. 1 gezeigt ist, kann der Betätigungsanteil 4 des Bedienelements 3, beispielsweise entgegen eines nicht näher dargestellten Federelements, durch eine erste Betätigungskraft 9 ausgelenkt werden. Um nun eine taktil wahrnehmbare Rückmeldung zu erzeugen, kann das Bedienelement 3 eine Anschlagstufe 10 aufweisen, welche reversibel überwindbar ist. Beispielsweise kann die Anschlagstufe 10 durch zumindest ein federelastisches Element ausgebildet sein, wogegen der Betätigungsanteil 4 des Bedienelements 3 auftrifft, sobald dieses in die erste Betätigungsstellung verlagert wurde. Dieses Auftreffen des Betätigungsanteils 4 auf die Anschlagstufe bildet die taktil wahrnehmbare Rückmeldung für den Nutzer des Kraftrades, welche diesem anzeigt, dass das Bedienelement 3 in der ersten Betätigungsstellung angeordnet ist.

Wird, ausgehend von der ersten Betätigungsstellung wie sie in Fig. 2a gezeigt ist, eine zweite Betätigungskraft 11 auf den Betätigungsanteil 4 des Bedienelements 3 aufgebracht, ist dieser in die zweite Betätigungsstellung verlagerbar, indem die Anschlagstufe 10, d. h. das elastische Federelement, zum Beispiel überdrückbar ist. Ist die Anschlagstufe 10 überdrückt, liegt der Betätigungsanteil 4 bei maximaler Auslenkung an einem Endanschlag 12 an, welcher beispielsweise durch einen Boden des Bedienelements 3 gebildet sein kann. Für den Fahrer des Kraftrades ist spätestens bei einem Anschlagen des Betätigungsanteils 4 an den Endanschlag 12, also an den Boden, des Bedienelements 3 klar, dass das Bedienelement in der zweiten Betätigungsstellung angeordnet ist. Ferner kann die taktil wahrnehmbare Rückmeldung für den Nutzer des Kraftrades auch dadurch ausgebildet sein, dass für das Überdrücken der die Anschlagstufe 10 eine im Vergleich höhere Kraft notwendig ist als zum Betätigen des Bedienelements in die erste Betätigungsstellung.

Wieder Bezug nehmend auf Fig. 1 ist dort dargestellt, dass die taktil wahrnehmbare Rückmeldung auch mittels des Aktors 6 erzeugt werden kann. Der Aktor 6 kann mit dem Bedienelement 3 mechanisch in Kontakt stehen, was in der Fig. 1 durch eine gestrichelte Linie dargestellt ist. Das bedeutet, dass die Steuereinheit 2 dazu eingerichtet sein kann, eine Betätigung des Bedienelements 3 dahingehend zu untersuchen, ob dieses in der ersten oder in der zweiten Betätigungsstellung angeordnet ist. Abhängig von dem Ergebnis kann die Steuereinheit 2 den Aktor 6 ansteuern, sodass dieser die taktil wahrnehmbare Rückmeldung, beispielsweise ein Vibrieren, über das Bedienelement 3 an den Nutzer des Kraftrades leitet. Insbesondere kann die Steuereinheit 2 dazu eingerichtet sein, den Aktor 6 so anzusteuern, dass eine erste taktil wahrnehmbare Rückmeldung ausgegeben wird, wenn das Bedienelement 3 in der ersten Betätigungsstellung angeordnet ist, und dass eine zweite taktil wahrnehmbare Rückmeldung über den Aktor 6 an dem Bedienelement 3 ausgegeben wird, wenn das Bedienelement 3 in der zweiten Betätigungsstellung angeordnet ist. Hierbei können die erste und die zweite taktil wahrnehmbare Rückmeldung voneinander unterschiedlich sein.

Es ist ferner in Fig. 1 dargestellt, dass die Bedieneinrichtung 1 und insbesondere die Steuereinheit 2 dazu eingerichtet sein können, die oben beschriebene taktil wahrnehmbare Rückmeldung alternativ oder zusätzlich über den Aktor 7 ausgeben zu können. Hierbei kann der Aktor 7 in mechanischem Kontakt zu einem Bauteil des Kraftrades stehen, welches von der Bedieneinrichtung unterschiedlich ist. Beispielsweise kann der Aktor 7 mit einem Lenker des Kraftrades, mit einer Pedalerie des Kraftrades oder mit einer Sitzfläche des Kraftrades etc. in mechanischem Kontakt stehen. Dementsprechend ist die taktil wahrnehmbare Rückmeldung, sobald das Bedienelement 3 in die erste oder in die zweite Betätigungsstellung angeordnet ist, dementsprechend zum Beispiel an dem Lenker, an der Pedalerie und/oder an der Sitzfläche für den Fahrer des Kraftrades zu spüren.

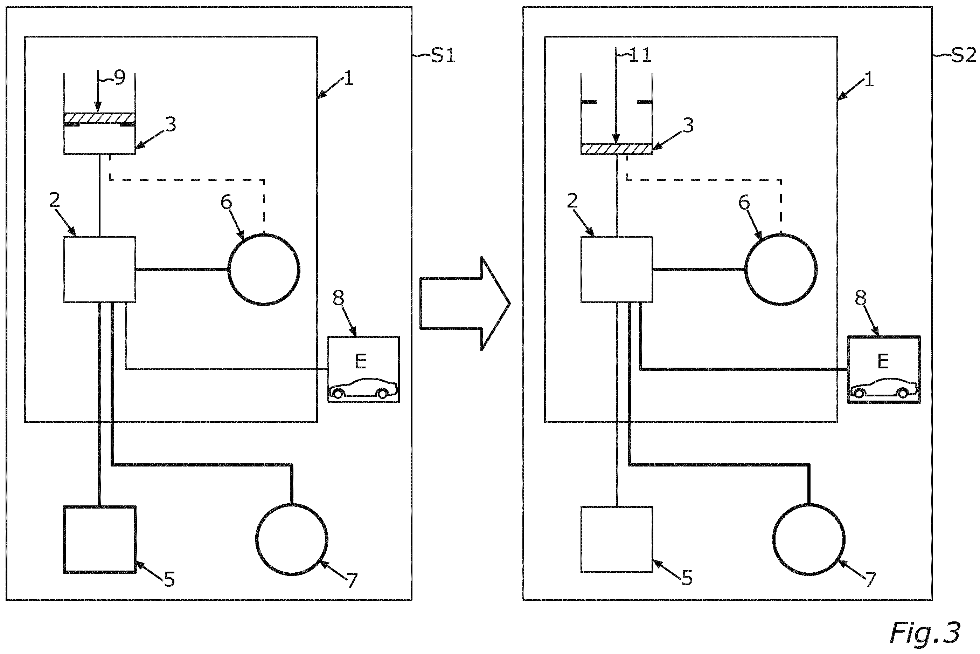

Fig. 3 zeigt Schritte eines Verfahrens zum Betreiben der oben beschriebenen Bedieneinrichtung. In einem ersten Schritt S1 wird das Bedienelement 3 in die erste Betätigungsstellung ausgelenkt. Hierdurch veranlasst die Steuereinheit 2 die Anzeigeeinrichtung 5, dass diese die der Funktion zugeordnete Information ausgibt. In einem zweiten Schritt S2 wird das Bedienelement 3 beispielsweise mittels der zweiten Betätigungskraft 11 in die zweite Betätigungsstellung ausgelenkt, sodass mittels der Steuereinheit 2 die mit dem Bedienelement 3 verknüpfte Fahrzeugfunktion ausgelöst wird. Hierbei kann die erste Betätigungskraft niedriger als die zweite Betätigungskraft sein.

Gleichzeitig zu dem ersten Schritt S1 und/oder gleichzeitig zu dem zweiten Schritt S2 wird mittels der Steuereinheit 2 eine taktil wahrnehmbare Rückmeldung ausgegeben, indem die Steuereinheit 2 den Aktor 6 und/oder den Aktor 7 ansteuert. Der Aktor 6 ist mechanisch mit dem Bedienelement 3 verbunden, sodass die taktil wahrnehmbare Rückmeldung über das Bedienelement 3 ausgegeben wird. Der Aktor 7 steht mechanisch mit einem von der Bedieneinrichtung unterschiedlichen Teil des Kraftrades in Verbindung, sodass die taktil wahrnehmbare Rückmeldung an dieser Stelle ausgegeben wird. Beispielsweise kann die taktil wahrnehmbare Rückmeldung an einem Lenker, an einer Pedalerie und/oder an einer Sitzfläche etc. des Kraftrades ausgegeben werden.

Wird beispielsweise durch die Steuereinheit 2 festgestellt, dass das Bedienelement 3 für eine vorgegebene Mindestdauer in der zweiten Betätigungsstellung gehalten wird, weist die Steuereinheit 2 dem Bedienelement eine andere Funktion zu. Insbesondere weist die Steuereinheit 2 dem Bedienelement 3 die Funktion zu, welche aktuell mittels der Anzeigeeinrichtung zwar optisch markiert, jedoch nicht ausgelöst ist. Anders ausgedrückt navigiert der Fahrer des Kraftrades mittels eines nicht näher beschriebenen Steuerelements und unter Zuhilfenahme der Anzeigeeinrichtung 5 zu dem entsprechenden Eintrag, welcher die Funktion auslöst, die der Nutzer des Kraftrades wunschgemäß auf das Bedienelement 3 legen möchte. Wird nun das Bedienelement 3 über die erste Betätigungsstellung hinaus in die zweite Betätigungsstellung betätigt und dort für die vorgegebene Mindestdauer gehalten, verknüpft die Steuereinheit 2 den aktuell auf der Anzeigeeinrichtung markierten Eintrag, also beispielsweise eine Funktionsauslösung, mit dem Bedienelement 3. Wieder anders ausgedrückt, ist das Bedienelement 3 durch einen Nutzer des Kraftrades, insbesondere den Fahrer, programmierbar. Das heißt, der Nutzer weist hiermit dem Bedienelement 3 eine von ihm gewünschte Funktion zu, sodass ein einfaches Betätigen dieses Bedienelements 3 die zugewiesene Funktion auslöst oder eine entsprechende Funktion auf der Anzeigeeinrichtung 5 ausgegeben wird.

Ist die oben beschriebene Zuweisung einer andere Funktion zu dem Bedienelement 3 abgeschlossen, kann mittels der Steuereinheit der Aktor 6 und/oder der Aktor 7 angesteuert werden, sodass eine taktil wahrnehmbare Rückmeldung erzeugt wird, um dem Nutzer des Kraftrades zu signalisieren, dass die Zuweisung der anderen Funktion zu dem Bedienelement 3 erfolgreich war. Insbesondere kann die taktil wahrnehmbare Rückmeldung als Bestätigung der Zuordnung der anderen Funktion zu dem Bedienelement eine weitere von den bisher beschriebenen taktil wahrnehmbaren Rückmeldungen unterschiedliche taktil wahrnehmbare Rückmeldung sein.

Die vorhergehende Beschreibung gilt auch für eine Bedieneinrichtung, welche in einem mehrspurigen Kraftfahrzeug, also beispielsweise in einem Personenkraftwagen, einem Nutzkraftwagen etc. eingesetzt ist.

### Bezugszeichenliste

- 1: Bedieneinrichtung
- 2: Steuereinheit
- 3: Bedienelement
- 4: Betätigungsanteil
- 5: Anzeigeeinrichtung
- 6: von Bedieneinrichtung 1 umfasster Aktor
- 7: von der Bedieneinrichtung 1 externer Aktor
- 8: Fahrzeugelektronik
- 9: Anschlagstufe
- 10: federelastisches Element
- 11: zweite Betätigungskraft
- 12: Endanschlag
- S1: erster Verfahrensschritt
- S2: zweiter Verfahrensschritt

## Patentansprüche

1. Bedieneinrichtung (1) zum Steuern von Funktionen eines Kraftfahrzeugs, mit einem Bedienelement (3), welches aus einer Ruhestellung über eine erste Betätigungsstellung hinaus in eine zweite Betätigungsstellung verlagerbar ist, wobei die Bedieneinrichtung (1) dazu ausgelegt ist, eine taktil wahrnehmbare Rückmeldung in zumindest der zweiten Betätigungsstellung des Bedienelements (3) auszugeben, mit einer Steuereinheit (2), welche dazu eingerichtet ist, eine Funktion, mit welcher das Bedienelement (3) belegt ist, auszulösen, wenn das Bedienelement (3) in der zweiten Betätigungsstellung angeordnet ist,
**dadurch gekennzeichnet, dass**
die Steuereinheit (2) dazu eingerichtet ist, in Abhängigkeit von der Funktion, eine Anzeigeeinrichtung (5) zum Anzeigen einer der Funktion zugeordneten Information anzusteuern, wenn das Bedienelement (3) in der ersten Betätigungsstellung angeordnet ist, wobei die Bedieneinrichtung (1) dazu ausgelegt ist, eine taktil wahrnehmbare Rückmeldung in der ersten Betätigungsstellung des Bedienelements (3) auszugeben, wobei die Steuereinheit (2) dazu ausgerichtet ist, einen auf das Bedienelement einwirkenden Aktor zum Ausgeben der taktil wahrnehmbaren Rückmeldung anzusteuern.

2. Bedieneinrichtung (1) nach Anspruch 1,
**dadurch gekennzeichnet, dass**
ein Betätigungsanteil (4) des Bedienelements (3) in der ersten Betätigungsstellung an einer Anschlagstufe (10) zum Anliegen kommt, wodurch eine taktil wahrnehmbare Rückmeldung erzeugt wird.

3. Bedieneinrichtung (1) nach Anspruch 1 oder 2,
**dadurch gekennzeichnet, dass**
ein Betätigungsanteil (4) des Bedienelements (3) in der zweiten Betätigungsstellung an einem Endanschlag (12) zum Anliegen kommt, wodurch eine taktil wahrnehmbare Rückmeldung erzeugt wird.

4. Bedieneinrichtung (1) nach einem der vorhergehenden Ansprüche,
**dadurch gekennzeichnet, dass**
die Steuereinheit (2) dazu eingerichtet ist, einen auf ein von der Bedieneinrichtung (1) unterschiedliches Bauteil einwirkenden Aktor (7) zum Ausgeben einer taktil wahrnehmbaren Rückmeldung anzusteuern.

5. Bedieneinrichtung (1) nach Anspruch 4,
**dadurch gekennzeichnet, dass**
die Steuereinheit (2) dazu eingerichtet ist, den Aktor (6, 7) oder die Aktoren (6, 7) zum Ausgeben einer taktil wahrnehmbaren Rückmeldung in zumindest einer der Stellungen des Bedienelements (3) anzusteuern.

6. Bedieneinrichtung (1) nach einem der vorhergehenden Ansprüche,
**dadurch gekennzeichnet, dass**
die Bedieneinrichtung (1) zumindest bereichsweise gegen ein Eindringen von Feuchtigkeit geschützt ist.

7. Verfahren zum Betreiben einer Bedieneinrichtung (1) nach einem der vorhergehenden Ansprüche, bei welchem
- mittels der Steuereinheit (2) in Abhängigkeit von der Funktion, mit welcher das Bedienelement (3) belegt ist, die Funktion ausgelöst wird, wenn das Bedienelement (3) in der zweiten Betätigungsstellung angeordnet ist,
- mittels der Bedieneinrichtung (1) eine taktil wahrnehmbare Rückmeldung in zumindest der zweiten Betätigungsstellung des Bedienelements (3) ausgegeben wird
**dadurch gekennzeichnet, dass**
- mittels der Steuereinheit (2) in Abhängigkeit von der Funktion, mit welcher das Bedienelement belegt (3) ist, die Anzeigeeinrichtung (5) zum Anzeigen der Information, die der Funktion zugeordnet ist, angesteuert wird, wenn das Bedienelement (3) in der ersten Betätigungsstellung angeordnet ist;
- mittels der Bedieneinrichtung (1) eine taktil wahrnehmbare Rückmeldung in der ersten Betätigungsstellung des Bedienelements (3) ausgegeben wird, wobei mittels der Steuereinheit (2) ein auf das Bedienelement einwirkender Aktor zum Ausgeben der taktil wahrnehmbaren Rückmeldung angesteuert wird.

8. Verfahren zum Betreiben einer Bedieneinrichtung (1) nach Anspruch 7,
**dadurch gekennzeichnet, dass**
mittels der Steuereinheit (2) dem Bedienelement (3) eine andere Funktion zugewiesen wird, wenn das Bedienelement (3) für eine vorgegebene Mindestdauer in der zweiten Betätigungsstellung gehalten wird und währenddessen ein die andere Funktion repräsentierendes Element mittels der Anzeigeeinrichtung (5) optisch markiert ist.

9. Verfahren zum Betreiben einer Bedieneinrichtung (1) nach Anspruch 8,
**dadurch gekennzeichnet, dass**
mittels der Steuereinheit (2) der Aktor (6, 7) zum Ausgeben einer taktil wahrnehmbaren Rückmeldung angesteuert wird, sobald die Zuweisung der anderen Funktion zu dem Bedienelement (3) erfolgt ist.

## Claims

1. Operator control device (1) for controlling functions of a motor vehicle, having an operator control element (3) which can be moved out of a position of rest, beyond a first activation position into a second activation position, wherein the operator control device (1) is configured to output feedback, which can be perceived in a tactile fashion, in at least the second activation position of the operator control element (3), and having a control unit (2) which is configured to trigger a function to which the operator control element (3) is assigned if the operator control element (3) is arranged in the second activation position,
**characterized in that**
the control unit (2) is configured to actuate, in accordance with the function, a display device (5) to display information associated with the function, if the operator control element (3) is arranged in the first activation position, wherein the operator control device (1) is configured to output feedback, which can be perceived in a tactile fashion, in the first activation position of the operator control element (3), wherein the control unit (2) is oriented to actuate an actuator, which acts on the operator control element, to output the feedback which can be perceived in a tactile fashion.

2. Operator control device (1) according to Claim 1, **characterized in that**
in the first activation position an activation portion (4) of the operator control element (3) comes to rest against a stop step (10), as a result of which feedback which can be perceived in a tactile fashion is generated.

3. Operator control device (1) according to Claim 1 or 2,
**characterized in that**
in the second activation position an activation portion (4) of the operator control element (3) comes to rest against an end stop (12), as a result of which feedback which can be perceived in a tactile fashion is generated.

4. Operator control device (1) according to one of the preceding claims,
**characterized in that**
the control unit (2) is configured to actuate an actuator (7), which acts on a component which is different from the operator control device (1), to output feedback which can be perceived in a tactile fashion.

5. Operator control device (1) according to Claim 4, **characterized in that**
the control unit (2) is configured to actuate the actuator (6, 7) or the actuators (6, 7) to output feedback, which can be perceived in a tactile fashion, in at least one of the positions of the operator control element (3).

6. Operator control device (1) according to one of the preceding claims,
**characterized in that**
the operator control device (1) is protected at least in certain areas against a penetration of moisture.

7. Method for operating an operator control device (1) according to one of the preceding claims, in which
- in accordance with the function to which the operator control element (3) is assigned, the function is triggered by means of the control unit (2) if the operator control element (3) is arranged in the second activation position,
- feedback which can be perceived in a tactile fashion is output in at least the second activation position of the operator control element (3) by means of the operator control device (1),
**characterized in that**
- in accordance with the function to which the operator control element (3) is assigned, the display device (5) is actuated, by means of the control unit (2), to display the information which is associated with the function if the operator control element (3) is arranged in the first activation position;
- feedback which can be perceived in a tactile fashion is output in the first activation position of the operator control element (3) by means of the operator control device (1), wherein an actuator, which acts on the operator control element, is actuated by means of the control unit (2) to output the feedback which can be perceived in a tactile fashion.

8. Method for operating an operator control device (1) according to Claim 7,
**characterized in that**
another function is allocated to the operator control element (3) by means of the control unit (2) if the operator control element (3) is held for a predefined minimum period in the second activation position, and during this time an element which represents the other function is marked visually by means of the display device (5).

9. Method for operating an operator control device (1) according to Claim 8,
**characterized in that**
the actuator (6, 7) for outputting feedback which can be perceived in a tactile fashion is actuated by means of the control unit (2) as soon as the allocation of the other function to the operator control element (3) has taken place.

## Revendications

1. Dispositif de commande (1) permettant de commander des fonctions d'un véhicule automobile, comprenant un élément de commande (3), qui est déplaçable à partir d'une position de repos, au-delà d'une première position d'actionnement, jusqu'à une deuxième position d'actionnement, le dispositif de commande (1) étant conçu pour fournir une réponse perceptible de manière tactile au moins dans la deuxième position d'actionnement de l'élément de commande (3), comprenant une unité de commande (2), qui est conçue pour déclencher une fonction dont l'élément de commande (3) est doté, lorsque l'élément de commande (3) est disposé dans la deuxième position d'actionnement,
**caractérisé en ce que**
l'unité de commande (2) est conçue pour commander, en fonction de la fonction, un dispositif d'affichage (5) servant à afficher une information associée à la fonction, lorsque l'élément de commande (3) est disposé dans la première position d'actionnement, le dispositif de commande (1) étant conçu pour fournir une réponse perceptible de manière tactile dans la première position d'actionnement de l'élément de commande (3), l'unité de commande (2) étant orientée pour commander un actionneur agissant sur l'élément de commande afin de fournir la réponse perceptible de manière tactile.

2. Dispositif de commande (1) selon la revendication 1,
**caractérisé en ce que**
une partie d'actionnement (4) de l'élément de commande (3) vient en appui contre un épaulement de butée (10) dans la première position d'actionnement, générant ainsi une réponse perceptible de manière tactile.

3. Dispositif de commande (1) selon la revendication 1 ou 2,
**caractérisé en ce que**
une partie d'actionnement (4) de l'élément de commande (3) vient en appui contre une butée d'extrémité (12) dans la deuxième position d'actionnement, générant ainsi une réponse perceptible de manière tactile.

4. Dispositif de commande (1) selon l'une des revendications précédentes,
**caractérisé en ce que**
l'unité de commande (2) est conçue pour commander un actionneur (7) agissant sur un composant différent du dispositif de commande (1) afin de fournir une réponse perceptible de manière tactile.

5. Dispositif de commande (1) selon la revendication 4,
**caractérisé en ce que**
l'unité de commande (2) est conçue pour commander l'actionneur (6, 7) ou les actionneurs (6, 7) afin de fournir une réponse perceptible de manière tactile dans au moins l'une des positions de l'élément de commande (3).

6. Dispositif de commande (1) selon l'une des revendications précédentes,
**caractérisé en ce que**
le dispositif de commande (1) est protégé, au moins dans certaines zones, contre une pénétration d'humidité.

7. Procédé permettant de faire fonctionner un dispositif de commande (1) selon l'une des revendications précédentes, dans lequel
- en fonction de la fonction dont l'élément de commande (3) est doté, la fonction est déclenchée, au moyen de l'unité de commande (2), lorsque l'élément de commande (3) est disposé dans la deuxième position d'actionnement,
- une réponse perceptible de manière tactile est fournie, au moyen du dispositif de commande (1), au moins dans la deuxième position d'actionnement de l'élément de commande (3),
**caractérisé en ce que**
- en fonction de la fonction dont l'élément de commande (3) est doté, le dispositif d'affichage (5) est commandé, au moyen de l'unité de commande (2), pour afficher l'information associée à la fonction, lorsque l'élément de commande (3) est disposé dans la première position d'actionnement,
- une réponse perceptible de manière tactile est fournie, au moyen du dispositif de commande (1), dans la première position d'actionnement de l'élément de commande (3), un actionneur agissant sur l'élément de commande étant commandé au moyen de l'unité de commande (2) afin de fournir la réponse perceptible de manière tactile.

8. Procédé permettant de faire fonctionner un dispositif de commande (1) selon la revendication 7, **caractérisé en ce que**
une autre fonction est attribuée, au moyen de l'unité de commande (2), à l'élément de commande (3) lorsque l'élément de commande (3) est maintenu dans la deuxième position d'actionnement pendant une durée minimale prédéfinie et pendant ce temps, un élément représentant l'autre fonction est marqué optiquement au moyen du dispositif d'affichage (5).

9. Procédé permettant de faire fonctionner un dispositif de commande (1) selon la revendication 8, **caractérisé en ce que**
l'actionneur (6, 7) est commandé, au moyen de l'unité de commande (2), pour fournir une réponse perceptible de manière tactile dès que l'attribution de l'autre fonction à l'élément de commande (3) est effectuée.
